# EUROPÄISCHE PATENTSCHRIFT

(11) **EP 3 010 613 B1**
(45) Veröffentlichungstag und Bekanntmachung des Hinweises auf die Patenterteilung: **02.08.2017**
(21) Anmeldenummer: 14752550.5
(22) Anmeldetag: 18.06.2014
(51) Int. Cl.: A63J 1/02

(54) **DOPPELMOTOR-ANTRIEBSEINHEIT FÜR ZUGMITTEL**
DOUBLE-MOTOR DRIVE UNIT FOR TRACTION MEANS
UNITÉ D'ENTRAÎNEMENT À DEUX MOTEURS POUR MOYEN DE TRACTION

(30) Priorität: 18.06.2013 DE 202013005539 U
(43) Veröffentlichungstag der Anmeldung: 27.04.2016
(73) Patentinhaber: Sowka, Maurycy, 33181 Bad Wünnenberg-Haaren (DE)
(72) Erfinder: Sowka, Maurycy, 33181 Bad Wünnenberg-Haaren (DE)
(74) Vertreter: Philipp, Matthias
(86) Internationale Anmeldenummer: PCT/DE2014/000313
(87) Internationale Veröffentlichungsnummer: WO 2014/202046

(56) Entgegenhaltungen:
- EP-A1- 0 147 487
- DE-A1- 10 005 075
- DE-A1- 10 117 466
- DE-U1-202011 003 649
- KR-B1- 101 219 123

## Beschreibung

Die Erfindung betrifft eine Antriebseinheit für mindestens ein Zugmittel, insbesondere in der Bühnentechnik, mit einer um eine Wickelachse drehantreibbar gelagerten Wickeltrommel, die mindestens einen Aufnahmebereich aufweist, auf dem (jeweils) ein auf- oder abwickelbares Zugmittel aufgenommen ist, wobei axial benachbart zu dem Aufnahmebereich ein zylindrischer Antriebsbereich auf der Wickeltrommel angeordnet ist, auf dem ein auf- oder abwickelbares bandförmiges Antriebsmittel aufgenommen ist, das unter Erzeugung eines auf die Wickeltrommel wirkenden Antriebsmoments von der Wickeltrommel abwickelbar und auf einer antreibbaren Antriebstrommel aufwickelbar ist, oder umgekehrt eine Drehung der Wickeltrommel freigebend, von der Antriebstrommel abwickelbar und auf der Wickeltrommel aufwickelbar ist, wie sie etwa aus der DE 20 2011 003 649 U1 bekannt ist.

Obwohl sich die bekannte Antriebseinheit sehr bewährt hat, besteht bisweilen Bedarf nach größeren Antriebsmomenten, die aufgrund der größeren Abmessungen des dann notwendigen Antriebsmotors zu größeren Baulängen, in axialer Richtung der Wickeltrommel gesehen, führen, was unerwünscht ist.

Die Aufgabe der Erfindung liegt daher darin, die bekannte Antriebseinheit dahingehend zu verbessern, dass eine größere Antriebsleistung und/oder eine größere maximale Zugkraft bei einer vergleichsweise geringen axialen Baulänge bereitgestellt werden kann.

Diese Aufgabe wird erfindungsgemäß durch eine Antriebseinheit für mindestens ein Zugmittel, insbesondere in der Bühnentechnik, mit einer um eine Wickelachse drehantreibbar gelagerten Wickeltrommel, die mindestens einen Aufnahmebereich aufweist, auf dem (jeweils) ein auf- oder abwickelbares Zugmittel aufgenommen ist, gelöst, wobei axial benachbart zu dem Aufnahmebereich ein zylindrischer Antriebsbereich auf der Wickeltrommel angeordnet ist, auf dem ein auf- oder abwickelbares bandförmiges Antriebsmittel aufgenommen ist, das unter Erzeugung eines auf die Wickeltrommel wirkenden Antriebsmoments von der Wickeltrommel abwickelbar und auf einer antreibbaren Antriebstrommel aufwickelbar ist, oder umgekehrt eine Drehung der Wickeltrommel freigebend, von der Antriebstrommel abwickelbar und auf der Wickeltrommel aufwickelbar ist, wobei sich die Antriebseinheit erfindungsgemäß dadurch auszeichnet, dass zwei Antriebsmotoren vorgesehen sind, mit jeweils einer Antriebswelle, deren Drehachse in einer quer zu der Wickelachse angeordneten Antriebsebene verläuft, mit einem mit den Antriebswellen in Antriebsverbindung stehenden Antriebsrad, dessen Drehachse parallel zu der Wickelachse verläuft, wobei das Antriebsrad mit den Antriebstrommeln in Antriebsverbindung steht.

Dadurch, dass die beiden Antriebsmotoren quer zur Achsrichtung der Wickeltrommel nebeneinander angeordnet sind, ergibt sich eine besonders geringe axiale Baulänge der Antriebseinheit.

Beiderseits des Antriebsrades können auf einer gemeinsamen Abtriebswelle zwei Antriebstrommeln angeordnet sein, wobei auf der Wickeltrommel zwei beabstandete zylindrische Antriebsbereiche angeordnet sind, und jeweils einer Antriebstrommel und einem Antriebsbereich ein Antriebsmittel zugeordnet ist.

Bevorzugt ist vorgesehen, dass die beiden Antriebsbereiche beiderseits benachbart zu dem Aufnahmebereich angeordnet sind.

Den beiden Antriebsbereichen kann jeweils eine Ausgleichrolle zugeordnet sein, über die die Antriebsmittel geführt sind, wobei Drehachsen der Ausgleichsrollen parallel zu der Wickelachse verlaufen und in einem gegenseitigen Abstand voneinander angeordnet sind, wobei die Ausgleichsrollen auf einem Ausgleichskörper drehbar gelagert sind, der seinerseits um eine parallel zu der Wickelachse und insbesondere mittig zwischen den Drehachsen der Ausgleichsrollen verlaufende Ausgleichsachse drehbar gelagert ist.

Das Antriebsrad kann als Schneckenrad ausgebildet sein, und auf den Antriebswellen der Antriebsmotoren kann jeweils eine Antriebsschnecke sitzen. Dadurch kann jeweils ein selbsthemmendes Getriebe gebildet sein. Damit ergibt sich eine doppelte Ausfallsicherheit im Falle eines Bruchs im Bereich einer der Antriebsschnecken.

Das Antriebs- oder Schneckenrad kann mit einem koaxial dazu angeordneten Sicherungsrad über eine Ausfallsicherung gekoppelt sein.

Erfindungsgemäß wird also vermieden, die Wickeltrommel unter Erzeugung eines notwendigerweise großen Drehmoments über ihre Achse in Drehung zu versetzen. Stattdessen wird die Wickeltrommel durch die Zugkraft eines auf sie selbst aufgewickelten bandförmigen Antriebsmittels in Drehung versetzt, wobei eine vergleichsweise geringe Zugkraft eines Antriebsmittels ausreicht. Ein derartiger Antrieb ist zudem ausgesprochen geräuscharm, was bei Anwendungen in der Bühnentechnik von wesentlicher Bedeutung ist.

Es kann vorgesehen sein, dass die Wickeltrommel mindestens einen zylindrischen Aufnahmebereich zum Aufwickeln einer Anzahl von axial nebeneinander liegenden Windungen des Zugmittels aufweist. Dies hat den Vorteil eines konstanten Antriebsmoments, allerdings u. U. den Nachteil einer größeren axialen Baulänge.

Alternativ besteht die Möglichkeit, dass die Wickeltrommel mindestens einen radial verlaufenden schlitzförmigen Aufnahmebereich aufweist, dessen axiale Breite gleich oder geringfügig größer als ein Durchmesser oder eine Breite des Zugmittels ist, zum Aufnehmen einer Anzahl von in radialer Richtung übereinanderliegenden Windungen des Zugmittels. Diese Ausführung hat den Vorteil einer kleinen axialen Baulänge, wobei allerdings das Antriebsmoment aufgrund des veränderlichen effektiven Wickeldurchmessers des Zugmittels ebenfalls veränderlich ist.

Unabhängig von der konkreten Ausbildung kann der Aufnahmebereich einen Basisdurchmesser von 0,3 Meter bis 2 Meter, insbesondere 0,7 Meter bis 1,2 Meter, aufweisen, wobei dies bei einem zylindrischen Aufnahmebereich dessen Durchmesser und bei einem radial verlaufenden schlitzförmigen Aufnahmebereich dessen kleinster Durchmesser ist.

Weiter kann vorgesehen sein, dass der zylindrische Antriebsbereich einen Durchmesser von 0,3 Meter bis 2 Meter, insbesondere 0,7 Meter bis 1,2 Meter, aufweist, wobei zu diesem Durchmesser im Betrieb die Dicke des jeweils bereits aufgewickelten Antriebsmittels hinzukommt, woraus sich dann ein effektiver Durchmesser ergibt.

Das Antriebsmittel ist bevorzugt ein Stahlband einer Breite von 5 mm bis 50 mm und einer Dicke von 0,05 bis 0,5 mm.

Auf dem zylindrischen Antriebsbereich der Wickeltrommel kann zusätzlich ein bandförmiges Sicherungsmittel aufgenommen sein, beispielsweise ebenfalls ein Stahlband, das gleichzeitig mit dem Antriebsmittel von der Antriebstrommel aufnehmbar oder von dieser abwickelbar ist. Sollte das Antriebsmittel oder das Sicherungsmittel versagen oder reißen, steht noch das jeweils andere, intakte Antriebs- oder Sicherungsmittel zur Verfügung.

Es kann vorgesehen sein, dass der Antriebstrommel eine oder zwei unabhängige Bremsen zugeordnet sind.

Insbesondere kann vorgesehen sein, dass die Wickeltrommel mit einer Torsionsspannfeder gekoppelt ist, die die Wickeltrommel entgegen einer das mindestens eine Zugmittel spannenden Drehrichtung vorspannt. Dadurch wird vermieden, dass bei nachlassender Zugmittelspannung das auf der Wickeltrommel aufgewickelte Antriebsmittel seinerseits an Spannung verliert und sich in unerwünschter Weise von der Wickeltrommel bzw. von dem Antriebsbereich löst.

Die Aufgabe der Erfindung wird weiterhin durch einen Prospektzug mit mehreren erfindungsgemäßen Antriebseinheiten gelöst, die axial nebeneinander und beispielsweise in Abständen von höchstens 30 cm, höchstens 25 cm oder höchstens 20 cm angeordnet sein können. Die erfindungsgemäße Bauform ermöglicht vergleichsweise geringe gegenseitige Abstände benachbarter Antriebseinheiten.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine perspektivische Ansicht wesentlicher Komponenten der erfindungsgemäßen Antriebseinheit ohne Gehäuseteile zeigt,
Fig. 2 eine Ansicht ähnlich Fig. 1 mit Gehäuseteilen zeigt,
Fig. 3 eine Draufsicht in axialer Richtung zeigt,
Fig. 4 eine Draufsicht quer zur axialen Richtung zeigt,
Fig. 5 eine axiale Draufsicht auf zwei Ausgleichsrollen zeigt,
Fig. 6 eine Längsschnittansicht der Ausgleichsrollen nach Fig. 5 zeigt,
Fig. 7 eine Schnittansicht des Schneckengetriebes durch die Ebene der Antriebswellen zeigt, und
Fig. 8 eine Schnittansicht des Schneckengetriebes entlang der Drehachse des Schneckenrads zeigt.

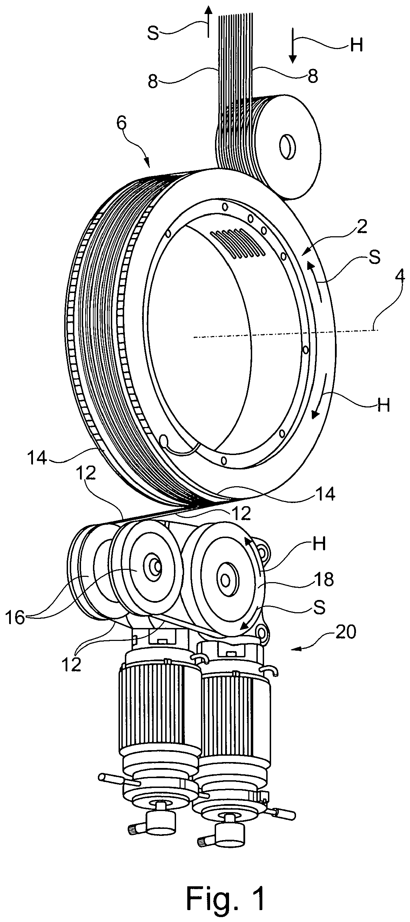

Fig. 1 zeigt in einer schematischen perspektivischen Ansicht die wesentlichen Teile einer erfindungsgemäßen Antriebseinheit für einen Prospektzug in der Bühnentechnik, mit einer Wickeltrommel 2, die um eine Wickelachse oder Drehachse 4 drehbar angetrieben ist. Die Wickeltrommel 2 weist mehrere, hier sechs unmittelbar nebeneinander angeordnete Aufnahmebereiche 6 für einzelne Zugmittel, hier Zugseile 8 auf, die in Form von radial zur Wickelachse 4 verlaufenden schlitzförmigen oder zylinderringförmigen Aufnahmebereichen ausgebildet sind und durch schmale, jeweils dazwischen angeordnete Zwischenwände voneinander getrennt sind. Anstelle der Zugseile 8 können Zugbänder vorgesehen sein. Eine lichte Breite, in Achsrichtung 4 gesehen, eines jeden Aufnahmebereichs entspricht einem Durchmesser eines darin aufgenommenen Zugseils (oder einer Breite eines Zugbands) oder ist geringfügig größer, so dass das jeweilige Zugmittel problemlos in einem Aufnahmebereich aufgewickelt werden kann. Zu diesem Zweck ist ein wickeltrommelseitiges Ende jedes Zugmittels 8 an der Wickeltrommel 2 fixiert und wird beim Aufwickeln in radial übereinander liegenden Windungen aufgenommen, ohne dass es axial ausweichen kann. Alternativ kann ein oder können mehrere Zugbänder anstelle von Zugseilen zum Einsatz kommen, etwa in Form von Stahlbändern.

Obwohl die einzelnen Zugseile 8 und ihre Aufnahmebereiche 6 in dem dargestellten Beispiel gleichen Durchmesser bzw. gleiche Breite aufweisen, besteht die Möglichkeit, unterschiedliche Seildurchmesser (oder Zugbandbreiten) in unterschiedlich breiten Aufnahmebereichen einzusetzen, wenn damit aufgrund der resultierenden unterschiedlichen Festigkeiten und/oder unterschiedlichen Aufwickelgeschwindigkeit bzw. Aufwickelwege bestimmte Wirkungen erzielt werden sollen.

Ferner besteht bei Zugseilen die Möglichkeit, anstelle der dargestellten Aufwicklung in radial übereinanderliegenden, spiralförmig im Durchmesser zunehmenden Windungen eine schraubenförmige Aufwicklung in axial nebeneinander liegenden Windungen gleichen Durchmessers vorzusehen, wobei dann allerdings die axiale Baulänge der Wickeltrommel und der Antriebseinheit als Ganzes zunimmt. Dies kann im Einzelfall zweckmäßig sein, wenn gleichmäßige, d.h. vom Aufwickelzustand unabhängige Wickelgeschwindigkeiten bzw. gleiche Aufwickelwege je Wickeltrommelumdrehung erzielt werden sollen.

Der Antrieb der Wickeltrommel 2 erfolgt über zwei bandförmige Antriebsmittel 12, die als Stahlbänder ausgeführt sein können. Die Antriebsmittel 12 sind auf zwei zylindrischen Antriebsbereichen 14 der Wickeltrommel 2 aufgenommen, die beiderseits der Aufnahmebereiche 6 angeordnet sind, wobei ein wickeltrommelseitiges Ende eines Antriebsmittels 12 an der Wickeltrommel 2 fixiert ist. Jedes Antriebsmittel 12 verläuft über eine Umlenk- und Ausgleichsrolle 16 zu einer Antriebstrommel 18, die von einem Antrieb 20 wahlweise in einer Aufwickel- oder Anheberichtung H oder in einer Abwickel- oder Absenkrichtung S antreibbar ist und an der es mit seinem anderen Ende fixiert ist.

Die beiden Antriebsmittel 12 sind somit teils auf der Wickeltrommel 2, teils auf der jeweiligen Anriebstrommel 18 aufgewickelt und werden je nach Antriebsrichtung von der Antriebstrommel ab- und auf der Wickeltrommel aufgewickelt (Absenkrichtung S) oder umgekehrt auf der Antriebstrommel auf- und von der Wickeltrommel abgewickelt (Anheberichtung H).

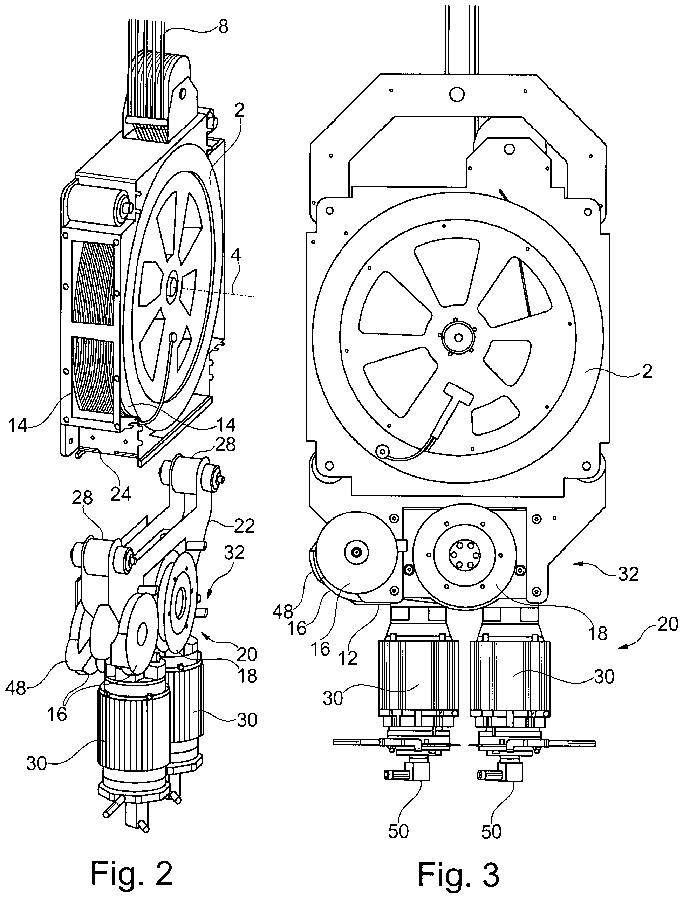

Fig. 2 zeigt eine ähnliche Ansicht wie Fig. 1, wobei zusätzlich eine Rahmeneinheit 22 dargestellt ist, an der der Antrieb 20 gehalten ist und die im montierten Zustand ihrerseits mit einer Rahmeneinheit 24 verbunden ist, in der die Wickeltrommel 2 und eine Umlenktrommel 26 gelagert ist. Die Rahmeneinheiten 22, 24 sind über geräusch- und schwingungsdämpfende Gummilagerelemente 28 miteinander verbunden.

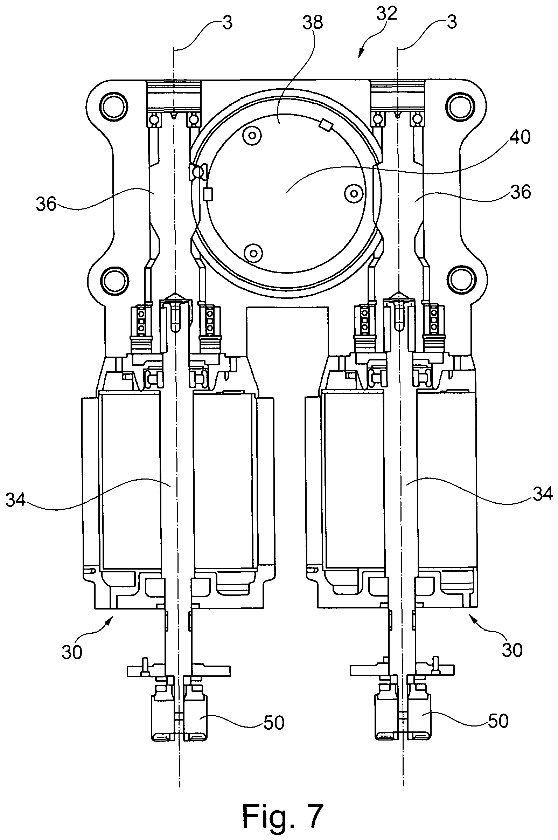

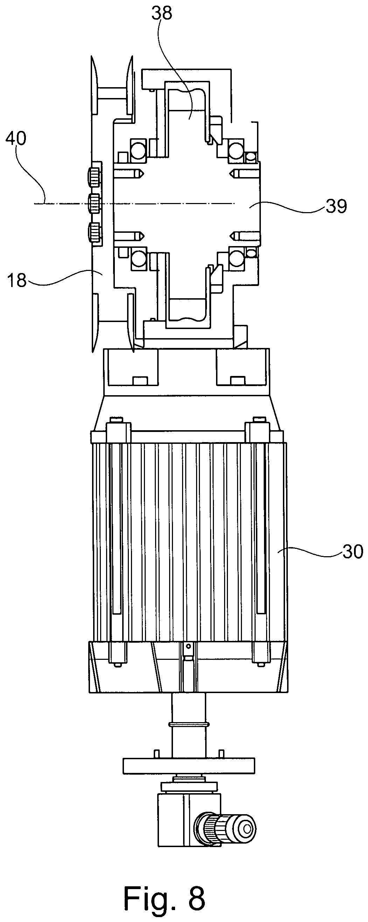

Fig. 3 zeigt eine axiale Draufsicht auf die erfindungsgemäße Antriebseinheit im montierten Zustand der Rahmeneinheiten 22, 24. Wie auch Fig. 1 und 2 zeigen, umfasst der Antrieb 20 zwei Antriebsmotoren 30, die mit einer Getriebeeinheit 32 verbunden sind, deren Aufbau aus Fig. 7 und 8 hervorgeht. Jeder Antriebsmotor 30 weist eine Antriebswelle 34 auf, die mit einer Antriebsschnecke 36 drehfest verbunden ist und die in der Getriebeeinheit 32 gelagert ist. Drehachsen 37 der Antriebswellen 34 und Antriebsschnecken 36 verlaufen in einer Ebene (Darstellungsebene von Fig. 7), die senkrecht zu der Wickelachse 4 verläuft.

Die Antriebsschnecken 36 stehen mit einem ein Antriebsrad bildenden Schneckenrad 38 in Antriebsverbindung, dessen Drehachse 40 parallel zu der Wickelachse 4 verläuft. Eine Abtriebswelle 39 ist mit dem Schneckenrad 38 und mit den Antriebstrommeln 18 drehfest verbunden.

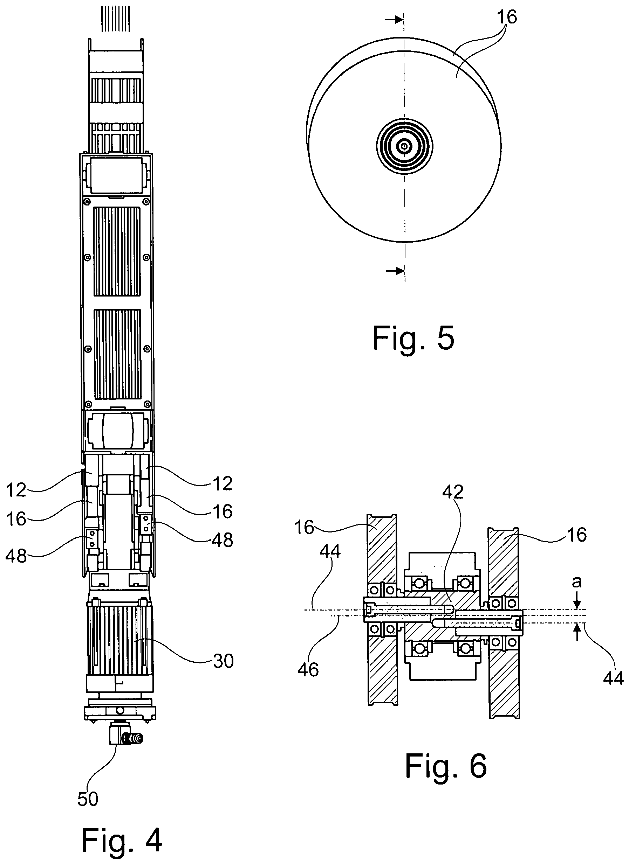

An der Getriebeeinheit 32 sind die Ausgleichsrollen 16 gelagert, deren Aufbau und Wirkungsweise sich mehr im Einzelnen aus Fig. 5 und 6 ergibt. Die beiden Ausgleichsrollen 16 sind auf einem Ausgleichskörper 42 um parallele Drehachsen 44 drehbar gelagert, die parallel zu der Wickelachse 4 angeordnet sind. Die Drehachsen 44 weisen einen gegenseitigen Abstand a auf. Der Ausgleichskörper 42 ist seinerseits um eine Drehachse 46 drehbar an der Getriebeeinheit 32 gelagert, wobei sich die Drehachse 46 mittig zwischen den Drehachsen 44 der Ausgleichsrollen 16 befindet. Auf diese Weise ist ein Ausgleich von geringfügigen Längenunterschieden der bandförmigen Antriebsmittel 12 möglich, so dass in diesen stets eine gleiche Zugkraft herrscht.

Um zu vermeiden, dass bei nachlassender Spannung der Antriebsmittel 12 diese von den Ausgleichsrollen 16 abspringen, sind diese neben beiderseitigen Flanschen mit einer Absprungsicherung 48 versehen. Da sich die Drehachsen 44 der Ausgleichsrollen 16 verlagern können, sind die Absprungsicherungen 48 nicht rahmen- oder gehäusefest, sondern an dem Ausgleichskörper 42 befestigt, damit stets ein gleichbleibender Abstand zwischen einer Absprungsicherung 48 und einer jeweiligen Ausgleichsrolle 16 besteht.

Wenn jeder einzelne Antriebsmotor mit der ihm zugeordneten Antriebsschnecke und dem Schneckenrad ein eigenständiges selbsthemmendes Getriebe bildet, hat ein Stromausfall kein unkontrolliertes Absenken einer angehobenen Last (Drehung der Wickeltrommel in Absenkrichtung S) zur Folge. Als weitere Sicherung verfügt das Schneckengetriebe neben dem Schneckenrad über ein zusätzliches Sicherungsrad. Sicherungsrad und Schneckenrad werden gemeinsam von den Antriebsschnecken angetrieben. Bei einem Bruch verdreht sich das Sicherungsrad zwangsläufig, und Haltebolzen greifen automatisch in Fangtaschen und versperren das Getriebe, so dass eine angehobene Last sicher gehalten wird.

Eine weitere Sicherung gegen unkontrolliertes Absenken einer Last ist dadurch gebildet, dass jedem Antriebsmotor ein Encoder 50 zugeordnet ist, mit dem die Winkelbewegung der jeweiligen Antriebswelle 34 erfasst werden kann. Wenn die beiden Encoder 50 der Antriebsmotoren 30 eine unterschiedliche Winkelgeschwindigkeit der Antriebswellen 34 erfassen, ist dies ein Hinweis auf einen Bruch im Bereich der Antriebsverbindung zwischen Antriebswellen und Antriebsrad bzw. Schneckenrad 38, woraufhin dann sogleich Bremsen ausgelöst werden, mit denen die Antriebswellen 34 blockiert werden.

### Bezugszeichenliste

- 2: Wickeltrommel
- 4: Wickelachse
- 6: Aufnahmebereich
- 8: Zugmittel (Zugseil)
- 12: Antriebsmittel
- 14: Antriebsbereich
- 16: Ausgleichsrolle
- 18: Antriebstrommel
- 20: Antrieb
- 22, 24: Rahmeneinheit
- 26: Umlenktrommel
- 28: Gummilagerelement
- 30: Antriebsmotor
- 32: Getriebeeinheit
- 34: Antriebswelle
- 36: Antriebsschnecke
- 38: Schneckenrad (Antriebsrad)
- 39: Abtriebswelle
- 40: Drehachse (von 38)
- 42: Ausgleichskörper
- 44: Drehachse (von 16)
- 46: Drehachse (von 42)
- 48: Absprungsicherung
- 50: Encoder

- H: Anheberichtung
- S: Absenkrichtung
- a: Abstand zwischen 44, 44

## Patentansprüche

1. Antriebseinheit für mindestens ein Zugmittel (8), insbesondere in der Bühnentechnik, mit einer um eine Wickelachse (4) drehantreibbar gelagerten Wickeltrommel (2), die mindestens einen Aufnahmebereich (6) aufweist, auf dem (jeweils) ein auf- oder abwickelbares Zugmittel (8) aufgenommen ist, wobei axial benachbart zu dem Aufnahmebereich (6) ein zylindrischer Antriebsbereich (14) auf der Wickeltrommel (2) angeordnet ist, auf dem ein auf- oder abwickelbares bandförmiges Antriebsmittel (12) aufgenommen ist, das unter Erzeugung eines auf die Wickeltrommel (2) wirkenden Antriebsmoments von der Wickeltrommel abwickelbar und auf einer antreibbaren Antriebstrommel (18) aufwickelbar ist, oder umgekehrt eine Drehung der Wickeltrommel (2) freigebend, von der Antriebstrommel (18) abwickelbar und auf der Wickeltrommel aufwickelbar ist, **dadurch gekennzeichnet, dass** zwei Antriebsmotoren (30) vorgesehen sind, mit jeweils einer Antriebswelle (34), deren Drehachsen (37) in einer quer zu der Wickelachse (4) angeordneten Antriebsebene verlaufen, mit einem mit den Antriebswellen (34) in Antriebsverbindung stehenden Antriebsrad (38), dessen Drehachse (40) parallel zu der Wickelachse (4) verläuft, wobei das Antriebsrad (38) mit den Antriebstrommeln (18) in Antriebsverbindung steht.

2. Antriebseinrichtung nach Anspruch 1, **dadurch gekennzeichnet, dass** beiderseits des Antriebsrads (38) auf einer gemeinsamen Abtriebswelle (39) zwei Antriebstrommeln (18) angeordnet sind, wobei auf der Wickeltrommel (2) zwei beabstandete Antriebsbereiche (14) angeordnet sind, und jeweils einer Antriebstrommel (18) und einem Antriebsbereich (14) ein Antriebsmittel (12) zugeordnet ist.

3. Antriebseinrichtung nach Anspruch 2, **dadurch gekennzeichnet, dass** die beiden Antriebsbereiche (14) beiderseits benachbart zu dem Aufnahmebereich (6) angeordnet sind.

4. Antriebseinrichtung nach Anspruch 2 oder 3, **dadurch gekennzeichnet, dass** den beiden Antriebstrommeln (18) jeweils eine Ausgleichsrolle (16) zugeordnet ist, über die die Antriebsmittel (12) geführt sind, deren Drehachsen (44) parallel zu der Wickelachse (4) verlaufen und in einem gegenseitigen Abstand (a) voneinander angeordnet sind, wobei die Ausgleichsrollen (16) auf einem Ausgleichskörper (42) drehbar gelagert sind, der seinerseits um eine parallel zu der Wickelachse (4) angeordnete Drehachse (46) drehbar gelagert ist.

5. Antriebseinrichtung nach einem der vorangehenden Ansprüche, **dadurch gekennzeichnet, dass** auf den Antriebswellen (34) der Antriebsmotoren (30) jeweils eine Antriebsschnecke (36) sitzt, die mit einem das Antriebsrad bildenden Schneckenrad (38) jeweils ein selbsthemmendes Getriebe bilden kann.

6. Antriebseinrichtung nach einem der vorangehenden Ansprüche, **dadurch gekennzeichnet, dass** das Antriebs- oder Schneckenrad (38) mit einem koaxial dazu angeordneten Sicherungsrad über eine Ausfallsicherung gekoppelt ist.

7. Antriebseinheit nach einem der vorangehenden Ansprüche, **dadurch gekennzeichnet, dass** die Wickeltrommel (2) mindestens einen zylindrischen oder profilierten Aufnahmebereich (6) zum Aufwickeln einer Anzahl von axial nebeneinander liegenden Windungen eines Zugseils (8) aufweist.

8. Antriebseinheit nach einem der vorangehenden Ansprüche, **dadurch gekennzeichnet, dass** die Wickeltrommel (2) mindestens einen radial verlaufenden, schlitzförmigen Aufnahmebereich (6) aufweist, dessen axiale Breite gleich oder geringfügig größer als ein Durchmesser oder eine Breite des Zugmittels (8) ist, zum Aufnehmen einer Anzahl von in radialer Richtung spiralförmig übereinander liegenden Windungen des Zugmittels (8).

9. Antriebseinheit nach einem der vorangehenden Ansprüche, **dadurch gekennzeichnet, dass** jedes Antriebsmittel (12) ein Stahlband mit einer Breite von 5 bis 50 mm und einer Dicke von 0,05 bis 0,5 mm ist.

10. Antriebseinheit nach einem der Ansprüche 4 bis 9, **dadurch gekennzeichnet, dass** jeder Ausgleichsrolle (16) eine Absprungsicherung (48) zugeordnet ist, die an dem Ausgleichskörper (42) gehalten ist.

11. Prospektzug, **dadurch gekennzeichnet, dass** mehrere Antriebseinheiten nach einem der vorangehenden Ansprüche axial nebeneinander angeordnet sind, insbesondere in Abständen von höchstens 30 cm, höchstens 25 cm oder höchstens 20 cm.

## Claims

1. Drive unit for at least one traction means (8), particularly in stage technology, comprising a winding drum (2) which is supported rotatably about a winding axis (4) and has at least one receiving region (6), on (each) of which a traction means (8) that can be wound or unwound is received, a cylindrical drive region (14), on which a windable or unwindable belt-shaped driving means (12) is received, being arranged axially adjacent to the receiving region (6) on the winding drum (2); said driving means can be unwound from the winding drum and wound on a drivable driving drum (18), a driving torque acting on the winding drum (2) thus being produced, or conversely can be unwound from the driving drum (18) and wound onto the winding drum, rotation of the winding drum (2) thus being permitted, **characterized in that** two drive motors (30) are provided, each having a drive shaft (34), the axes of rotation (37) of which extend in a drive plane arranged perpendicular to the winding axis (4); a drive wheel (38) is also provided, having a drive connection to the drive shafts (34), the axis of rotation (40) of which extends parallel to the winding axis (4), wherein the drive wheel (38) has a drive connection to the driving drums (18).

2. Drive unit according to claim 1, **characterized in that** two driving drums (18) are arranged on both sides of the drive wheel (38) on a common output shaft (39), wherein two spaced apart drive regions (14) are arranged on the winding drum (2) and a driving means (12) is associated with a driving drum (18) and a drive region (14) in each case.

3. Drive unit according to claim 2, **characterized in that** the two drive regions (14) are arranged on both sides adjacent to the receiving region (6).

4. Drive unit according to claim 2 or 3, **characterized in that** an equalizer roll (16) is associated in each case with the two driving drums (18) arranged at a mutual distance (a) from one another, via which the driving means (12) are guided and the axes of rotation (44) of which extend parallel to the winding axis (4), wherein the equalizer rolls (16) are rotatably mounted on an equalizer body (42), which in turn is rotatably mounted about an axis of rotation (46) arranged parallel to the winding axis (4).

5. Drive unit according to any one of the above claims, **characterized in that** a driving worm (36), which in each case can form a self-locking transmission with a worm gear (38) forming the drive wheel, sits on the drive shafts (34) of the drive motors (30) in each case.

6. Drive unit according to any one of the above claims, **characterized in that** the drive- or worm gear (38) is coupled with a safety wheel arranged coaxially to this by means of a failsafe device.

7. Drive unit according to any one of the above claims, **characterized in that** the winding drum (2) has at least one cylindrical or profiled receiving region (6) for winding a number of turns of a traction cable (8) lying axially next to one another.

8. Drive unit according to any one of the above claims, **characterized in that** the winding drum (2) has at least one radially extending, slot-shaped receiving region (6), the axial width of which is equivalent to or slightly larger than a diameter or a width of the traction means (8), for taking up a number of turns of the traction means (8) lying in the radial direction helically one above the other.

9. Drive unit according to any one of the above claims, **characterized in that** each driving means (12) is a steel belt having a width of 5 to 50 mm and a thickness of 0.05 to 0.5 mm.

10. Drive unit according to any one of claims 4 to 9, **characterized in that** a jump-off prevention device (48), which is held on the equalizer body (42), is associated with each equalizer roll (16).

11. Backdrop, **characterized in that** several drive units are arranged axially next to one another according to any one of the above claims, particularly at distances of 30 cm maximum, 25 cm maximum or 20 cm maximum.

## Revendications

1. Unité d'entraînement pour au moins un moyen de traction (8), surtout dans le domaine de la technologie de scène, comportant un tambour d'enroulement (2) qui est soutenu de manière à pouvoir tourner autour d'un axe d'enroulement (4) et qui comprend au moins une zone de réception (6), qui est chacune dotée d'un moyen de traction (8) pouvant être enroulé ou déroulé, une zone d'entraînement cylindrique (14) comportant une unité d'entraînement (12) enroulable ou déroulable en forme de courroie qui est disposée axialement à côté de la zone de réception (6) sur le tambour d'enroulement (2), l'unité d'entraînement pouvant être déroulée du tambour d'enroulement et enroulée sur un tambour d'entraînement (18) entraînable, ceci faisant produire un couple d'entraînement qui agit sur le tambour d'entraînement (2), ou bien inversement déroulé du tambour d'entraînement (18) et enroulé sur le tambour d'enroulement, la rotation de ce tambour d'enroulement (2) étant ainsi autorisée, **caractérisée en ce que** deux moteurs d'entraînement (30) sont prévus, chacun d'eux doté d'un arbre d'entraînement (34), dont les axes de rotation (37) s'étendent dans un plan d'entraînement disposé perpendiculairement à l'axe d'enroulement (4); par ailleurs, il est également prévu une roue d'entraînement (38) raccordée de manière à commander les arbres d'entraînement (34), et dont l'axe de rotation (40) est disposé parallèlement à l'axe d'enroulement (4), **caractérisée en ce que** la roue d'entraînement (38) est raccordée de manière à commander les tambours d'enroulement (18).

2. Unité d'entraînement selon la revendication 1, **caractérisée en ce que** les deux tambours d'enroulement (18) sont disposés sur les deux côtés de la roue d'entraînement (38) sur un même arbre de sortie (39), **caractérisée en ce que** deux zones d'entraînement écartées l'une de l'autre (14) sont disposées sur le tambour d'enroulement (2) et **en ce qu'**un moyen d'entraînement (12) est associé à un tambour d'entraînement (18) et une zone d'entraînement (14) dans chaque cas.

3. Unité d'entraînement à selon la revendication 2, **caractérisée en ce que** les deux zones d'entraînement (14) sont disposés sur les deux côtés près de la zone de réception (6).

4. Unité d'entraînement selon la revendication 2 ou 3, **caractérisée en ce qu'**un rouleau d'égalisation (16) est associé dans chaque cas aux deux tambours d'entraînement (18) disposés à une distance mutuelle (a) l'un par rapport à l'autre, par l'intermédiaire desquels les moyens d'entraînement (12) sont guidés et dont les axes de rotation (44) s'étendent parallèlement à l'axe d'enroulement (4), **caractérisée en ce que** les rouleaux d'égalisation (16) sont montés de manière à pouvoir tourner sur un corps d'égalisation (42) qui, lui, est monté de manière à pouvoir tourner autour d'un axe de rotation (46) disposé parallèlement à l'axe d'enroulement (4).

5. Unité d'entraînement selon l'une quelconque des revendications précédentes, **caractérisée en ce qu'**une vis sans fin d'entraînement (36) qui, dans chaque cas, peut former une transmission à auto-verrouillage avec un engrenage à vis sans fin (38) constituant la roue d'entraînement, s'appuie sur les arbres d'entraînement (34) des moteurs d'entraînement (30) dans chaque cas.

6. Unité d'entraînement selon l'une quelconque des revendications précédentes, **caractérisée en ce que** l'engrenage à vis sans fin (38) ou d'entraînement est raccordé à une roue de sécurité disposée de manière coaxiale par rapport à la roue au moyen d'un dispositif à sûreté intégrée.

7. Unité d'entraînement selon l'une quelconque des revendications précédentes, **caractérisée en ce que** le tambour d'enroulement (2) comporte au moins une zone de réception (6) cylindrique ou profilée servant à enrouler plusieurs tours d'un câble de traction (8) qui sont disposés axialement l'un à côté de l'autre.

8. Unité d'entraînement selon l'une quelconque des revendications précédentes, **caractérisée en ce que** le tambour d'enroulement (2) comporte au moins une zone de réception (6) en forme de rainure et s'étendant radialement, dont la largeur axiale est l'équivalent d'un diamètre ou d'une largeur qui est l'équivalent du diamètre ou de la largeur du moyen de traction (8), ou qui les dépasse légèrement, et qui sert à recevoir plusieurs tours du moyen de traction (8) disposé hélicoïdalement dans le sens radial l'un au-dessus de l'autre.

9. Unité d'entraînement selon l'une quelconque des revendications précédentes, **caractérisée en ce que** chaque moyen d'entraînement (12) est une courroie en acier de 5 à 50 mm de large et de 0,05 à 0,5 mm d'épaisseur.

10. Unité d'entraînement selon l'une quelconque des revendications 4 à 9, **caractérisée en ce qu'**un dispositif de prévention de l'échappement (48), tenu sur le corps d'égalisation (42) est associé à chaque rouleau d'égalisation (16).

11. Toile de fond **caractérisée en ce que** plusieurs unités d'entraînement sont disposées axialement l'une à côté de l'autre selon l'une quelconque des revendications précédentes, plus particulièrement à des distances maximales de 30 cm, de 25 cm ou de 20 cm.å
